# EUROPEAN PATENT SPECIFICATION

(11) **EP 4 403 774 B1**
(45) Date of publication and mention of the grant of the patent: **25.03.2026**
(21) Application number: 24152469.3
(22) Date of filing: 17.01.2024
(51) Int. Cl.: F04B 53/02, F04B 53/14, F04B 53/18

(54) **PISTON RING**
KOLBENRING
SEGMENT DE PISTON

(30) Priority: 17.01.2023 US 202318155680
(43) Date of publication of application: 24.07.2024
(73) Proprietor: Hamilton Sundstrand Corporation, Charlotte, NC 28217-4578 (US)
(72) Inventor: JARMAN, Jecee, Pueblo, CO (US); LE DUC, Zachary Allen Ray, Rockford, IL (US); HOLOWCZAK, John E., East Hartford, CT (US)
(74) Representative: Dehns

(56) References cited:
- CN-B- 101 922 425
- CN-U- 203 594 579
- DE-A1- 102007 040 089
- DE-A1- 102020 116 656
- JP-A- 2002 130 116

## Description

### TECHNICAL FIELD

The present disclosure relates to pumps, in particular, piston rings for pumps.

### BACKGROUND

Traditional piston rings, e.g., for piston pumps, can be made of tool steel, which provides excellent wear resistance in a fuel pump application when run on a cylinder barrel made from tungsten carbide. However, tungsten carbide cylinder barrels are also very dense and heavy, which can be a draw back in certain applications where the weight of the components must be carefully considered. Pumps with piston rings are disclosed in DE 10 2020 116656 A1 and JP 2002 130116 A.

There remains a need for a highly wear resistant material which is lighter and/or less dense than traditional materials. This disclosure provides a solution for this need.

### SUMMARY

In accordance with at least one aspect of this disclosure, a pump system for an aircraft is provided as defined by claim 1.

In embodiments, the system can further include the pump. In embodiments, the cylinder barrel can include a main cylindrical body, a center recess defined within the main cylindrical body configured to seat a drive shaft therein, and a plurality of bores defined in the main cylindrical body configured to allow fluid flow therethrough, each respective bore extending in an axial direction. In embodiments, the plurality of bores can be spaced apart circumferentially relative to one another about the main cylindrical body radially outward of the center recess. In embodiments, the respective bore can be one of the plurality of bores. In certain embodiments, the main cylindrical body can be of tool steel. In certain embodiments, a friction coefficient between the piston ring and the inner surface of the bore can be about 0.11 when hydrodynamically lubricated.

In certain embodiments, the pump can be or include a piston pump. In certain embodiments, the piston pump can be or include a bent axis variable displacement piston pump. In certain embodiments, the plurality of bores can include at least 7 bores, and can include up to 13 bores.

In accordance with at least one aspect of this disclosure, a method can include forming a cylinder barrel of a piston pump. Forming the cylinder barrel can include, forming a main cylindrical body, forming a center recess configured to seat a drive shaft therein, and forming a plurality of bores each extending in an axial direction through the main cylindrical body, the plurality of bores forming a pattern disposed circumferentially about the main cylindrical body radially outward of the center recess, configured to seat a respective piston therein and allow fluid flow therethrough. The method can further include, forming a silicon nitride piston ring configured to be disposed about a respect piston.

In certain embodiments, the method can include installing the cylinder barrel into the piston pump and installing a respective silicon nitride piston ring about the respective piston and inserting the respective piston into the respective bore of the cylinder barrel.

In embodiments, the method can further include operating the piston pump, and in certain embodiments, during operation of the piston pump, the plurality of bores can remain substantially the same diameter throughout the life of the cylinder barrel.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-sectional side elevation view of a system in accordance with this disclosure, showing an embodiment of a pump;
Fig. 2 is a perspective view of an embodiment of a cylinder barrel configured to be used in the pump of Fig. 1;
Fig. 3 is a bottom up view of the cylinder barrel of Fig. 2;
Fig. 4 is a cross sectional side elevation view of the cylinder barrel of Fig. 2; and
Fig. 5 is a perspective view of an embodiment of a piston ring configured to be used in the pump of Fig. 1.

### DETAILED DESCRIPTION

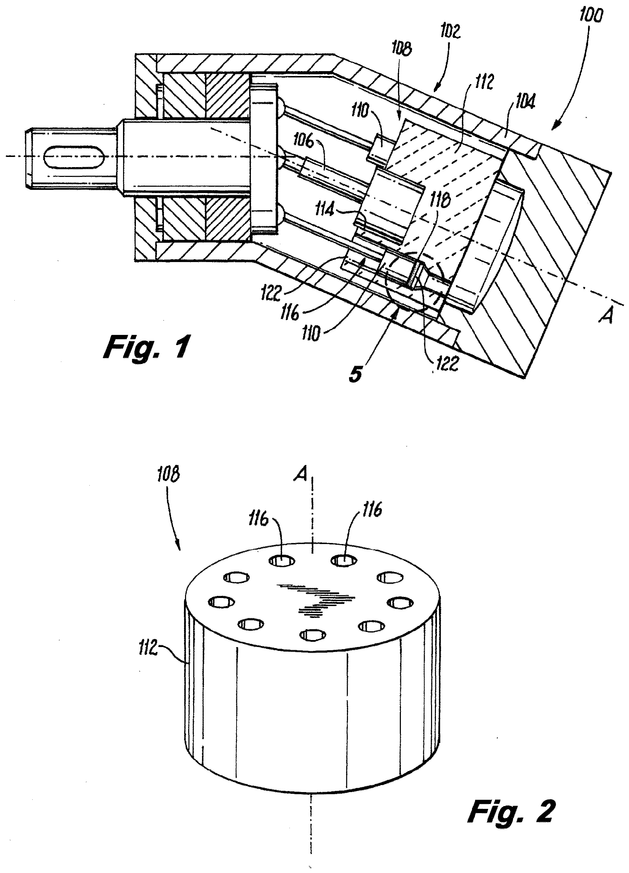

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-5.

In accordance with at least one aspect of this disclosure, e.g., as shown in Fig. 1, a system 100 can include a pump 102. In embodiments, the pump 102 can be or include a piston pump, and in certain embodiments, the pump can be or include a bent axis variable displacement piston pump (e.g., shown in Fig. 1). The pump 102 can include, at least, a pump housing 104, a drive shaft 106, a cylinder barrel 108, and a plurality of pistons 110. The cylinder barrel 108 can be operatively connected to the drive shaft 106 to rotate within the pump housing 104.

With reference now to Figs. 1-4, in embodiments, the cylinder barrel 108 can include a main cylindrical body 112 defining a barrel axis. In certain embodiments, the main cylindrical body can be formed monolithically. A center recess 114 can be defined within the main cylindrical body 112 configured to seat the drive shaft 106 therein, along the barrel axis A. A plurality of bores 116 can be defined in the main cylindrical body 112, extending in an axial direction through the main cylindrical body 112 (e.g., in a direction parallel to the barrel axis A). As shown, the plurality of bores 116 can be spaced apart circumferentially relative to one another about the main cylindrical body 112, and radially outward of the center recess 114. Each of the plurality of bores 116 can be configured to seat a respective piston therein (e.g., piston 110) and allow fluid flow therethrough. During operation of the pump 102, the respective pistons 110 translate axially along the barrel axis A within the respective bores 116 to selectively change an amount of flow through the respective bore 116, and ultimately the total displacement through the pump 102. In certain embodiments, the plurality of bores 116 can include at least 7 bores, for example, and up to 13 bores. An embodiment of the cylinder barrel 108 having 9 bores 116 is shown. Any suitable number of bores 116 is contemplated herein.

In embodiments, each respective piston 110 further includes a piston ring 118 disposed at an end 120 thereof (or integrally formed thereon at an end 120 thereof) configured to form a hydrodynamic seal with an inner surface 122 of the respective bore 116. In certain embodiments, the piston 110 can be of tool steel and the piston ring 118 can be of silicon nitride. In certain embodiments, only the piston ring 118 is of silicon nitride. In embodiments, the main cylindrical body 108 can be tool steel or tungsten carbide.

A friction coefficient between the piston ring 118 and the inner surface 122 of the respective bore 116 can be about 0.11 (silicon nitride-tool steel interface) when hydrodynamically lubricated. The selection of materials for the main cylindrical body 108 and the piston rings 118 (e.g., tool steel and lubricated silicon nitride, respectively) can allow for about 15% reduction in friction coefficient, as compared to a lubricated tool steel piston ring and a tungsten carbide cylindrical body (friction coefficient of 0.13), for example. As tungsten carbide parts wear, tool steel piston ring and tungsten carbide cylindrical body interfaces can become poorly lubricated and increase in friction coefficient towards unlubricated values of 0.19. Although the wear life of silicon nitride on tool steel has been shown to be an order of magnitude higher than tungsten carbide-tool steel interfaces, as wear occurs between silicon nitride cylindrical piston rings and tool steel cylinder barrels, the friction coefficient will tend towards an unlubricated value of about 0.15 (about a 25% decrease compared to the unlubricated tungsten carbide-tool steel value of about 0.19).

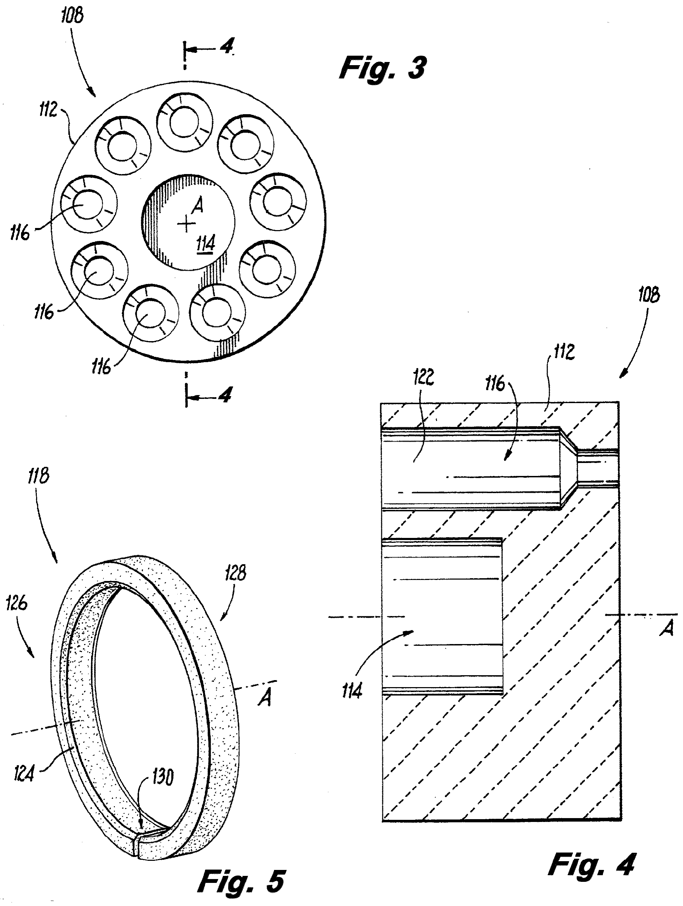

In certain embodiments, e.g., as shown more clearly in Fig. 5, the piston ring 118 can have a chamfer or radius 124 on either the outer periphery or inner periphery of a leading edge side 126 of the ring 118, opposite a trailing edge side 128. In certain embodiments, both the leading edge side 126 and the trailing edge side 128 can have the chamfer or radius 124. In embodiments, the piston ring 118 can have a cut 130 to allow the piston to have some spring constant, for example to accommodate thermal expansion of the piston 110 or piston ring 118.

In accordance with at least one aspect of this disclosure, with reference to Figs. 1-5, a method can include forming a cylinder barrel (e.g., cylinder barrel 108) of a piston pump (e.g., pump 102), and installing the cylinder barrel into the piston pump. In embodiments, forming the cylinder barrel can further include, forming a main cylindrical body (e.g., body 112), forming a center recess (e.g., recess 114) configured to seat a drive shaft therein, forming a plurality of bores (e.g., bores 116) each extending in an axial direction through the main cylindrical body, the plurality of bores forming a pattern disposed circumferentially about the main cylindrical body radially outward of the center recess, configured to seat a respective piston (e.g., piston 110) therein and allow fluid flow therethrough. In embodiments, the method can include installing a piston ring (e.g., piston ring 118) on each piston, the piston ring being of silicon nitride.

The method can further include, operating the piston pump. In embodiments, during operation of the piston pump, the plurality of bores can be configured to remain substantially the same diameter throughout the life of the cylinder barrel, i.e. the bore should remain substantially the same size due to the silicon nitrides natural resistance to wear in high friction applications.

In accordance with at least one aspect of this disclosure, a method can include forming a silicon nitride piston ring (e.g., piston rind 118) configured to be disposed about a respective piston (e.g., piston 116) of a piston pump (e.g., pump 100). In embodiments, the method can include installing the silicon nitride piston ring of the respective piston and joining a first free end and a second free end of the piston ring (e.g., between cut 130) with an adhesive. In certain embodiments, the adhesive can be oil soluble.

Embodiments provide for a lower density piston ring and cylinder barrel, which can reduce the overall weight of the pump when these components are made from silicon nitride and tool steel, respectively. The silicon nitride piston rings are configured to withstand the load demands of the pump. Embodiments having silicon nitride piston rings are naturally more lubricious based on material and wear properties silicon nitride derives from its crystal structure. In combination with its lubricity, engineered versions of silicon nitride can have high strength and high toughness to survive service conditions. These properties combined help reduce part degradation and produce slower wearing piston rings when rings are rubbed against mated surfaces. This can increase the total number service hours of the piston rings and even the pump as a whole.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the invention as defined by the claims.

## Claims

1. A pump system for an aircraft, comprising:
a cylinder barrel (108) configured to rotate within a pump housing (104) of a pump (102), and
a plurality of pistons (110) seated within a respective bore (116) defined in the cylinder barrel, wherein each piston further includes a piston ring (118) disposed at an end thereof configured to form a hydrodynamic seal with an inner surface (122) of the respective bore, wherein each respective piston ring is of silicon nitride; wherein the cylinder barrel comprises:
a main cylindrical body (112);
a center recess (114) defined within the main cylindrical body configured to seat a drive shaft (106) therein; and
a plurality of bores (116) defined in the main cylindrical body configured to allow fluid flow therethrough, each respective bore extending in an axial direction, wherein the plurality of bores are spaced apart circumferentially relative to one another about the main cylindrical body radially outward of the center recess, wherein the respective bore is one of the plurality of bores; and **characterized in that**:
the piston ring (118) includes a cut (130) therethrough configured to allow for thermal expansion of the piston ring.

2. The system of claim 1, further comprising the pump.

3. The system of claim 2, wherein the cylinder barrel comprises:
a main cylindrical body (112);
a center recess (114) defined within the main cylindrical body configured to seat a drive shaft (106) therein; and
a plurality of bores (116) defined in the main cylindrical body configured to allow fluid flow therethrough, each respective bore extending in an axial direction, wherein the plurality of bores are spaced apart circumferentially relative to one another about the main cylindrical body radially outward of the center recess, wherein the respective bore is one of the plurality of bores.

4. The system of claim 1, 2 or 3, wherein the main cylindrical body is of tool steel.

5. The system of claim 4, wherein a friction coefficient between the ring and the inner surface of the bore is about 0.11 when hydrodynamically lubricated.

6. The system of claim 2, wherein the pump is or includes a piston pump.

7. The system of claim 6, wherein the piston pump is or includes a bent axis variable displacement piston pump.

8. The system of any preceding claim, wherein the plurality of bores includes at least 7 bores.

9. The system of claim 8, wherein the plurality of bores includes up to 13 bores.

10. The system of any preceding claim, wherein the piston ring includes a chamfer or radius on either the outer or inner periphery of a leading edge of the piston ring.

## Patentansprüche

1. Pumpensystem für ein Luftfahrzeug, umfassend:
eine Zylindertrommel (108), die konfiguriert ist, um sich innerhalb eines Pumpengehäuses (104) einer Pumpe (102) zu drehen, und
eine Vielzahl von Kolben (110), die in einer jeweiligen Bohrung (116) sitzen, die in der Zylindertrommel definiert ist, wobei jeder Kolben ferner einen Kolbenring (118) einschließt, der an einem Ende davon angeordnet ist, konfiguriert, um eine hydrodynamische Dichtung mit einer Innenoberfläche (122) der jeweiligen Bohrung zu bilden, wobei jeder jeweilige Kolbenring aus Siliziumnitrid ist;
wobei die Zylindertrommel umfasst:
einen zylindrischen Hauptkörper (112);
eine mittlere Aussparung (114), die innerhalb des zylindrischen Hauptkörpers definiert ist, konfiguriert, um eine Antriebswelle (106) darin aufzunehmen; und
eine Vielzahl von Bohrungen (116), die in dem zylindrischen Hauptkörper definiert sind, konfiguriert, um einen Fluidstrom dort hindurch zu ermöglichen, wobei sich jede jeweilige Bohrung in einer axialen Richtung erstreckt, wobei die Vielzahl von Bohrungen in Umfangsrichtung relativ zueinander um den zylindrischen Hauptkörper radial auswärts der mittleren Aussparung beabstandet ist, wobei die jeweilige Bohrung eine der Vielzahl von Bohrungen ist; und **dadurch gekennzeichnet, dass**:
der Kolbenring (118) einen Schnitt (130) dort hindurch einschließt, der konfiguriert ist, um eine thermische Ausdehnung des Kolbenrings zu ermöglichen.

2. System nach Anspruch 1, ferner umfassend die Pumpe.

3. System nach Anspruch 2, wobei die Zylindertrommel umfasst:
einen zylindrischen Hauptkörper (112);
eine mittlere Aussparung (114), die innerhalb des zylindrischen Hauptkörpers definiert ist, konfiguriert, um eine Antriebswelle (106) darin aufzunehmen; und
eine Vielzahl von Bohrungen (116), die in dem zylindrischen Hauptkörper definiert sind, konfiguriert, um einen Fluidstrom dort hindurch zu ermöglichen, wobei sich jede jeweilige Bohrung in einer axialen Richtung erstreckt, wobei die Vielzahl von Bohrungen in Umfangsrichtung relativ zueinander um den zylindrischen Hauptkörper radial auswärts der mittleren Aussparung beabstandet ist, wobei die jeweilige Bohrung eine der Vielzahl von Bohrungen ist.

4. System nach Anspruch 1, 2 oder 3, wobei der zylindrische Hauptkörper aus Werkzeugstahl ist.

5. System nach Anspruch 4, wobei ein Reibungskoeffizient zwischen dem Ring und der Innenoberfläche der Bohrung etwa 0,11 beträgt, wenn er hydrodynamisch geschmiert wird.

6. System nach Anspruch 2, wobei die Pumpe eine Kolbenpumpe ist oder einschließt.

7. System nach Anspruch 6, wobei die Kolbenpumpe eine Schrägachsen-Verstellkolbenpumpe ist oder einschließt.

8. System nach einem der vorhergehenden Ansprüche, wobei die Vielzahl von Bohrungen mindestens 7 Bohrungen einschließt.

9. System nach Anspruch 8, wobei die Vielzahl von Bohrungen bis zu 13 Bohrungen einschließt.

10. System nach einem der vorhergehenden Ansprüche, wobei der Kolbenring eine Fase oder einen Radius an entweder dem Außen- oder dem Innenumfang einer Vorderkante des Kolbenrings einschließt.

## Revendications

1. Système de pompe pour un aéronef, comprenant :
un barillet de cylindres (108) configuré pour tourner à l'intérieur d'un carter de pompe (104) d'une pompe (102), et
une pluralité de pistons (110) logés dans un alésage (116) respectif défini dans le barillet de cylindres, dans lequel chaque piston comporte en outre une bague de piston (118) disposée à une extrémité de celui-ci, configurée pour former un joint hydrodynamique avec une surface interne (122) de l'alésage respectif, dans lequel chaque bague de piston respective est en nitrure de silicium ; dans lequel le barillet de cylindres comprend :
un corps cylindrique principal (112) ;
un évidement central (114) défini dans le corps cylindrique principal, configuré pour y loger un arbre d'entraînement (106) ; et
une pluralité d'alésages (116) définis dans le corps cylindrique principal, configurés pour permettre un écoulement de fluide à travers ceux-ci, chaque alésage respectif s'étendant dans une direction axiale, dans lequel la pluralité d'alésages est espacée circonférentiellement les uns par rapport aux autres autour du corps cylindrique principal radialement vers l'extérieur de l'évidement central, dans lequel l'alésage respectif est l'un de la pluralité d'alésages ; et **caractérisé en ce que** :
la bague de piston (118) comporte une découpe (130) la traversant, configurée pour permettre la dilatation thermique de la bague de piston.

2. Système selon la revendication 1, comprenant en outre la pompe.

3. Système selon la revendication 2, dans lequel le barillet de cylindres comprend :
un corps cylindrique principal (112) ;
un évidement central (114) défini dans le corps cylindrique principal, configuré pour y loger un arbre d'entraînement (106) ; et
une pluralité d'alésages (116) définis dans le corps cylindrique principal, configurés pour permettre un écoulement de fluide à travers ceux-ci, chaque alésage respectif s'étendant dans une direction axiale, dans lequel la pluralité d'alésages est espacée circonférentiellement les uns par rapport aux autres autour du corps cylindrique principal radialement vers l'extérieur de l'évidement central, dans lequel l'alésage respectif est l'un de la pluralité d'alésages.

4. Système selon la revendication 1, 2 ou 3, dans lequel le corps cylindrique principal est en acier à outils.

5. Système selon la revendication 4, dans lequel un coefficient de frottement entre la bague et la surface interne de l'alésage est d'environ 0,11 lorsqu'il est lubrifié hydrodynamiquement.

6. Système selon la revendication 2, dans lequel la pompe est ou comporte une pompe à pistons.

7. Système selon la revendication 6, dans lequel la pompe à pistons est ou comporte une pompe à pistons à axe brisé à cylindrée variable.

8. Système selon l'une quelconque des revendications précédentes, dans lequel la pluralité d'alésages comporte au moins 7 alésages.

9. Système selon la revendication 8, dans lequel la pluralité d'alésages comporte jusqu'à 13 alésages.

10. Système selon l'une quelconque des revendications précédentes, dans lequel la bague de piston comporte un chanfrein ou un rayon sur la périphérie externe ou interne d'un bord d'attaque de la bague de piston.
